# EUROPÄISCHE PATENTSCHRIFT

(11) **EP 0 475 004 B1**
(45) Veröffentlichungstag und Bekanntmachung des Hinweises auf die Patenterteilung: **21.06.1995**
(21) Anmeldenummer: 91111265.4
(22) Anmeldetag: 06.07.1991
(51) Int. Cl.: B29C 41/22, B26D 7/10

(54) **Verfahren zur Herstellung von mehrfarbigen Slushhäuten, sowie Form und Trennvorrichtung zur Durchführung des Verfahrens**
Process for manufacturing multi-coloured skins by slush moulding, mold and cutting device for carrying out the process
Procédé de fabrication par moulage au renversé de revêtements multicolores, moule et dispositif de coupe pour mise en oeuvre du procédé

(30) Priorität: 14.09.1990 DE 4029254
(43) Veröffentlichungstag der Anmeldung: 18.03.1992
(73) Patentinhaber: Benecke-Kaliko Aktiengesellschaft, D-30419 Hannover (DE)
(72) Erfinder: Minke, Jürgen, Dipl.-Ing., W-3031 Lindwedel (DE); Wolff, Roland, Dipl.-Ing., W-3016 Seelze 8 (DE); Bruder, Axel, Dr., W-3006 Burgwedel 3 (DE); Wagner, Werner, Dr., W-3052 Bad Nenndorf (DE)
(74) Vertreter: Patentanwälte Thömen & Körner

(56) Entgegenhaltungen:
- EP-A- 0 162 594
- EP-A- 0 367 636
- GB-A- 1 157 439
- US-A- 4 634 360
- US-A- 4 650 623
- PATENT ABSTRACTS OF JAPAN vol. 14, no. 331 (M-999)(4274) 17. Juli 1990 & JP-A-2 112 914 (KANTO SEIKI CO LTD ) 25. April 1990
- PATENT ABSTRACTS OF JAPAN vol. 9, no. 11 (M-351)(1734) 18. Januar 1985 & JP-A-59 159 309 (INOUE EMU TEE PII K.K. ) 8. September 1984

## Beschreibung

Die Erfindung befaßt sich mit einem Verfahren zur Herstellung von mehrfarbigen Slushhäuten (Formteilen) mit unterschiedlichen Farbbereichen gemäß dem Oberbegriff des Patentanspruchs 1.

Es ist bekannt, Formteile (z. B. Armaturentafeln für die Innenausstattung von Kraftfahrzeugen) nach dem Powder-Slush-Verfahren herzustellen. Dabei wird die beispielsweise der dreidimensionalen Form einer Armaturentafel entsprechende Form aufgeheizt und mit einer Pulverwanne zusammengekoppelt.

Durch eine Rotation der durch die Form und die Pulverwanne gebildeten Einheit erfolgt eine Verteilung des gelierfähigen PVC Pulvers, welches mit der heißen Form in Kontakt gebracht wird und daran kleben bleibt. Die Verteilung des Pulvers kann durch Steuerung der Rotation beeinflußt werden.

Nach Beendigung der Rotation, nachdem sich also das Pulver auf der beheizten Oberfläche der Innenwandung der Form abgelagert hat, wird die Pulverwanne wieder von der Form getrennt, und es folgt die Phase des Sinterns und Gelierens des Pulvers in der Form.

Nachdem das an der Form anhaftende Pulver zusammengesintert ist und sich eine Slushhaut gebildet hat, wird die Form gekühlt. Anschließend wird die Slushhaut entformt, also aus der Form entnommen.

Das soweit beschriebene bekannte Powder-Slush-Verfahren setzt voraus, daß die gebildete Slushhaut einfarbig ist, weil über den gesamten Bereich der Form nur ein bestimmtes PVC-Pulver zur Anwendung kommt. Demgegenüber besteht in der Praxis jedoch häufig das Bedürfnis, Formteile, insbesondere Armaturentafeln für die Kraftfahrzeuginnenausstattung, mehrfarbig, also mit unterschiedlichen Farbbereichen, auszubilden. Dabei soll das Powder-Slush-Verfahren beibehalten werden, welches sich bei der Herstellung von Slushhäuten generell bewährt hat.

Eine bekannte Möglichkeit bietet die Maskentechnik. Wenn beispielsweise eine zweifarbige Slushhaut erwünscht ist, wird in der Form die einem ersten Farbbereich entsprechende Farbzone durch eine Maske abgedeckt, so daß nur die andere, dem zweiten Farbbereich entsprechende Farbzone frei ist. In dieser Farbzone wird dann unter Verwendung von PVC-Pulver mit der gewünschten zweiten Farbe ein Teil der gesamten Slushhaut hergestellt.

Anschließend wird umgekehrt verfahren, d. h., jetzt wird die bereits gefertigte Teil-Slushhaut in der zweiten Farbzone mit einer anderen Maske abgedeckt, so daß in der Form die erste Farbzone frei ist, auf der unter Verwendung eines anderen PVC-Pulvers mit der ersten Farbe nun der zweite Teil der Slushhaut erzeugt wird. Die Masken sind so ausgebildet, daß zwischen den einzelnen Farbzonen ein schmaler Übergangsbereich gebildet ist, so daß mit der Herstellung des zweiten Teils der Slushhaut diese sich mit dem zuvor hergestellten ersten Teil der Slushhaut längs einer Trennaht verbinden kann und damit eine insgesamt einteilige Slushhaut entsteht.

Diese Maskentechnik ist zwar grundsätzlich geeignet, mehrfarbige Slushhäute zu gewinnen, allerdings zeigt sich in der Praxis, daß die Trennaht optisch unsauber wirkt. Gerade die Trennaht, die zwischen den unterschiedlichen Farbbereichen verläuft, ist jedoch das entscheidende Kriterium für eine optisch einwandfreie mehrfarbige Slushhaut.

Während bei der Maskentechnik die Slushhautteile mit den unterschiedlichen Farben zeitlich nacheinander gewonnen werden, ist es durch die EP 0 162 594 A2 auch schon bekannt, diese Farbbereiche zur gleichen Zeit in einer Form herzustellen. Zu diesem Zweck werden in der Form durch Trennstege abgegrenzte unterschiedliche Kammern bzw. Farbzonen gebildet, in die unterschiedliches PVC-Pulver mit den entsprechenden gewünschten Farben eingebracht wird. Die Trennstege sind so ausgebildet, daß nach Beendigung des Powder-Slush-Verfahrens eine einteilige Slushhaut entsteht.

Zwar läßt sich mit dieser Technik die Herstellungszeit einer mehrfarbigen Slushhaut verkürzen, jedoch hat sich auch hier gezeigt, daß die Trennähte nicht sauber ausgebildet werden, was sich für den Anwender optisch störend auswirkt.

Schließlich ist aus der EP-A-0 367 636 ein Verfahren zur Herstellung von mehrfarbigen Slushhäuten bekannt, bei der in einer Form erhabene Abziehflächen vorgesehen sind. Nach dem Herstellen einer Slushhaut mit einer ersten Farbe werden im Bereich der Abziehflächen der Form Streifen von der übrigen Fläche der Haut abgezogen. Die Trennung erfolgt dabei im Bereich der Absatzkante der erhabenen Abziehflächen der Form. Dabei wird die Materialschwächung und die Kerbwirkung der Kanten der Abziehflächen ausgenutzt, um eine Reißlinie zu erzielen. Es ist jedoch nicht sicher, daß die beim Abziehen der Streifen gebildete Trennlinie gleichmäßig verläuft. Vielmehr besteht die Gefahr, daß sie bei Abziehen ausfranst.

Nach dem Abziehen der Streifen wird dann in einem weiteren Schritt eine Slushhaut mit einer zweiten Farbe aufgebracht und schließlich die mehrfarbige Slushhaut entfernt.

Der Erfindung liegt die Aufgabe zugrunde, ein Verfahren zur Herstellung von mehrfarbigen Slushhäuten anzugeben, welches an den Übergangsstellen zwischen den einzelnen Farbbereichen exakte und saubere Trennähte gewährleistet. Die Lösung dieser Aufgabe erfolgt bei dem im Oberbegriff des Patentanspruchs 1 genannten Verfahren durch die Merkmale des kennzeichnenden Teils des Anspruchs 1.

Die Erfindung beschreitet den neuen und überraschenden Weg, zunächst die gesamte Slushhaut einfarbig mit einer ersten Farbe nach dem üblichen Powder-Slush-Verfahren herzustellen. Allerdings verbleibt die Slushhaut zunächst noch in der Form, d.h., es wird nicht entformt.

In der Form werden die den einzelnen Farbbereichen zugeordneten Farbzonen durch Trennstege gebildet. Im Falle einer zweifarbigen Slushhaut wird diese nun auf dem Trennsteg getrennt, und der der zweiten Farbe zugeordnete Teil der Slushhaut wird entfernt, so daß eine teilweise Entformung erfolgt, wobei der der ersten Farbe zugeordnete Teil der Slushhaut in der Form verbleibt.

Als nächstes wird nun wieder die gesamte Form, also auch der Bereich, in dem der der ersten Farbe zugeordnete Teil der Slushhaut verblieben ist, mit einem der zweiten Farbe zugeordneten PVC-Pulver gefüllt, um dann in an sich üblicher Weise nach dem Powder-Slush-Prozeß wiederum eine insgesamt einteilige Slushhaut herzustellen. Weil dabei die der ersten Farbe zugeordnete Farbzone durch die zurückgebliebene Teil-Slushhaut abgedeckt ist, ergibt sich von der Narbseite her betrachtet eine einteilige Slushhaut mit zwei Farbbereichen. In der praktischen Realisierung hat sich dabei als Vorteil gezeigt, daß an der Übergangsstelle von der einen zur anderen Farbe eine exakte und saubere Trennaht erzielt wird.

Bei dem erfindungsgemäßen Verfahren wird also in jedem einer Farbe zugeordneten Verfahrensschritt stets eine einheitliche Slushhaut über den gesamten Formbereich gebildet. Dies mag zwar auf den ersten Blick umständlich erscheinen, tatsächlich zeigt aber die Anwendung des erfindungsgemäßen Verfahrens, daß dieser Umstand durch die Erzielung sauberer Trennähte mehr als kompensiert wird.

Die Erfindung betrifft ferner eine Vorrichtung zur Herstellung von farbigen Slushhäuten, und in dieser Hinsicht liegt ihr die Aufgabe zugrunde, eine Form zu schaffen, welche die Herstellung mehrfarbiger Slushhäute mit sauberen Trennähten ermöglicht.

Zu diesem Zweck ist vorgesehen, die den unterschiedlichen Farbbereichen zugeordneten Farbzonen in der Form durch Trennstege voneinander abzugrenzen.

Diese Trennstege ermöglichen es, einzelne Bereiche der zunächst als Ganzes hergestellten Slushhaut abzutrennen, um Hautbereiche teilweise zu entformen.

In einer zweckmäßigen Ausgestaltung der Erfindung weisen die Trennstege im Querschnitt eine Keilform mit zwei spitz aufeinander zulaufenden Flanken auf. Diese Querschnittsform ermöglicht ein einfaches Abtrennen einzelner Hautbereiche mit einer der Keilform in etwa angepaßten Trennvorrichtung.

In weiterer Ausgestaltung der Erfindung ist die Höhe der Trennstege nur geringfügig größer als die Dicke der zuerst gebildeten Slushhaut.

Gleichwohl behindern die Trennstege die Bildung einer einheitlichen Slushhaut über den gesamten Formbereich nicht. Daneben ist gewährleistet, daß sich danach einzelne Hautbereiche entlang der Trennstege leicht abtrennen und entformen lassen.

Zum Zweck einer sauberen Trennung der zunächst einteiligen Slushhaut entlang der Trennstege dient eine Trennvorrichtung mit einer aufheizbaren Trennschneide.

Mit Hilfe dieser aufheizbaren Trennschneide, die durch die Trennvorrichtung entlang der Trennstege geführt wird, erfolgt eine Erwärmung der Slushhaut im Bereich der Trennstege, wodurch sich in Verbindung mit der mechanischen Reibbewegung auf dem Trennsteg einzelne Hautbereiche sauber voneinander trennen lassen.

Vorzugsweise besitzt die Trennschneide auf ihrer äußeren Seite im bogenförmigen Verlauf eine Führungskerbe, deren Querschnittsform dem Querschnitt der Trennstege angepaßt ist.

Durch diese Maßnahme wird die Führung der Trennvorrichtung entlang der Trennstege besonders sicher, so daß ein sauberes Schnittbild bzw. eine saubere Trennaht entsteht, die auch genau dem Verlauf des Trennsteges entspricht.

Weitere zweckmäßige Ausgestaltungen und Weiterbildungen der Erfindung ergeben sich aus den Unteransprüchen und der Beschreibung sowie der Zeichnung.

Nachfolgend wird die Erfindung zum besseren Verständnis anhand des in der Zeichnung dargestellten Ausführungsbeispiels näher erläutert. Es zeigen:
- Fig. 1 - 4: jeweils eine schematische Querschnittsansicht einer Form mit einem Trennsteg während unterschiedlicher Verfahrensstufen bei der Herstellung einer zweifarbigen Slushhaut,
- Fig. 5: eine Querschnittsansicht einer fertigen zweifarbigen Slushhaut,
- Fig. 6 - 7: unterschiedliche Ansichten einer Trennvorrichtung mit einer Trennschneide,
- Fig. 8: eine vergrößerte Teil-Darstellung eines bogenförmigen Bereiches der Trennschneide, und
- Fig. 9: eine Querschnittsansicht einer Trennschneide und eines Trennstegs.

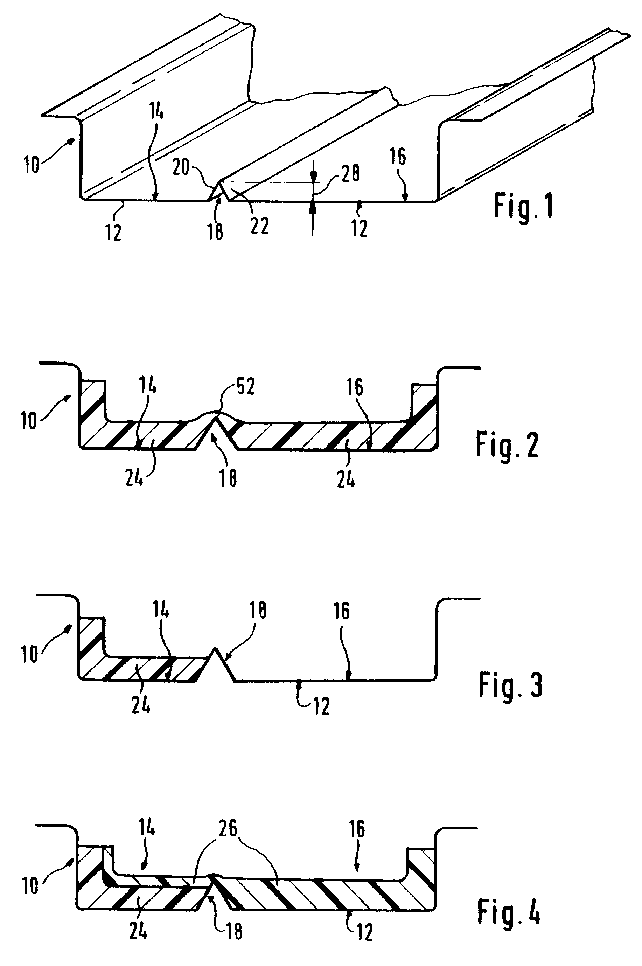

Fig. 1 zeigt in schematischer Querschnittsansicht eine Form 10 zur Herstellung einer hier zweifarbigen Slushhaut nach dem Powder-Slush-Verfahren. Die Formfläche 12 der Form 10 ist in zwei Farbzonen 14 und 16 unterteilt, die durch einen Trennsteg 18 voneinander abgegrenzt sind.

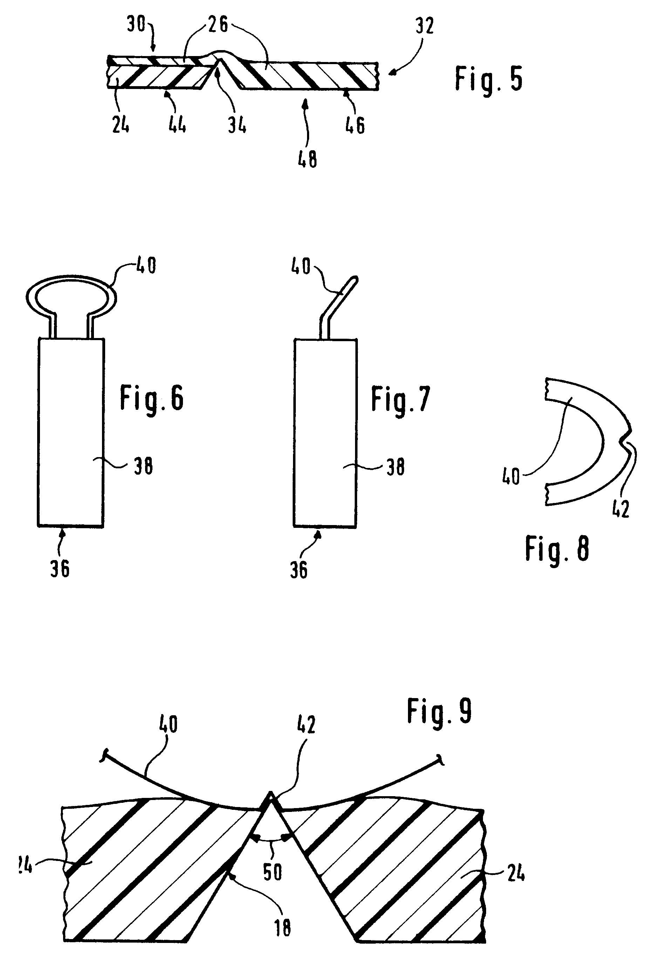

Der Trennsteg 18 besitzt eine Keilform mit zwei Flanken 20 und 22 und weist eine durch die Bezugsziffer 28 angedeutete Höhe auf. Der Keilwinkel 50 (vgl. Fig. 9) beträgt vorzugsweise 45°. Wie weiter unten noch erläutert wird, ist die Höhe 28 des Trennsteges 18 geringfügig größer als die Dicke der Slushhaut.

Bei der Herstellung einer zweifarbigen Slushhaut wird nun so vorgegangen, daß zunächst über den Bereich der gesamten Formfläche 12 und der beiden Farbzonen 14 und 16 zunächst eine einteilige erste Slushhaut 24 gebildet wird.

Zu diesem Zweck wird in an sich bekannter Weise nach dem Herstellungsprozeß beim Powder-Slush-Verfahren die Form 10 mit einer nicht dargestellten Pulverwanne zusammengekuppelt, die mit einem ersten PVC-Pulver gefüllt ist, welches eine erste Farbe besitzt. Durch Rotation der durch die Pulverwanne und die Form 10 gebildeten Einheit gelangt das PVC-Pulver mit der heißen Form 10 in Kontakt und bleibt auf der Formfläche 12 kleben. Die Pulverwanne mit dem überschüssigen PVC-Pulver wird wieder von der Form 10 getrennt.

Gemäß der Darstellung in Fig. 2 hat sich die einteilige erste Slushhaut 24 mit einer geringen Erhebung 52 über dem Trennsteg 18 gebildet, nachdem das an der Formfläche 12 anhaftende Pulver zusammengesintert ist.

Nunmehr wird die erste Slushhaut im Bereich des Trennsteges 18 getrennt, und der der rechten Farbzone 16 zugeordnete Hautteil wird entformt, während links im Bereich der Farbzone 14 ein Teil der ersten Slushhaut 24 zurückbleibt. Dieser Zustand entspricht der Darstellung gemäß Fig. 3.

Im nächsten Arbeitsschritt wird nun unter Verwendung eines anderen PVC-Pulvers mit einer anderen Farbe in der oben beschriebenen Weise nach dem Powder-Slush-Verfahren eine zweite Slushhaut 26 hergestellt, so daß sich der in Fig. 4 gezeigte Zustand ergibt. Wie zu erkennen ist, bildet sich im Bereich der rechten Farbzone 16 in normaler Weise die zweite Slushhaut 26 aus. Natürlich gelangt bei der Erzeugung der zweiten Slushhaut 26 das entsprechende PVC-Pulver auch auf die in der Form in der Farbzone 14 verbliebene erste Slushhaut 24. Hier bildet sich aber nur eine sehr dünne zweite Slushhaut 26 aus. Die Temperatur auf der Rückseite der ersten Slushhaut 24 ist nämlich geringer als die Temperatur im Bereich der rechten Farbzone 16. Deshalb kann auf der ersten Slushhaut 24 nur ein geringer Teil des PVC-Pulvers der Slushhaut 26 zusammensintern. Gleichwohl zeigt Fig. 4, daß im zweiten Arbeitsschritt eine einteilige zweite Slushhaut 26 gebildet wurde, die jedoch unterschiedliche Hautdicken besitzt.

Zwar wird in der beschriebenen Weise die erste Slushhaut 24 im Bereich der linken Farbzone 14 bei der Gewinnung der zweiten Slushhaut 26 ein zweites Mal durch die Form 10 erhitzt, und anschließend unterliegt die erste Slushhaut 24 einer erneuten Abkühlung. In Versuchen hat sich jedoch gezeigt, daß diese zweimalige Behandlung ohne Einfluß auf die erste Slushhaut 24 ist.

Gegebenenfalls kann es erforderlich sein, die Verfahrensparameter des Powder-Slush-Verfahrens, nämlich die Drehzahl der Rotation und/oder die Formtemperatur zu variieren, weil es z. B. zweckmäßig ist, die erste Slushhaut 24 dünner als die zweite Slushhaut 26 herzustellen (vgl. Fig. 5).

Die gemeinsame Slushhaut nach Fig. 4, bestehend aus dem Hautteil der ersten Slushhaut 24 und der zweiten Slushhaut 26, die mit ihrem dünnen Teil im linken Bereich der Farbzone 14 mit der ersten Slushhaut 24 verbunden ist, wird nach Abkühlung entformt.

Es steht nunmehr die in Fig. 5 im Querschnitt dargestellte Slushhaut zur Verfügung, die sich von der Narbseite 48 her als zweifarbige Slushhaut 32 darstellt.

Die zweifarbige Slushhaut 32 besitzt von der Narbseite 48 her betrachtet zwei unterschiedliche Farbbereiche 44 und 46, die durch eine Trennaht 34 voneinander abgegrenzt sind. Die Trennaht 34 rührt von dem Trennsteg 18 her. Wie sich in praktischen Versuchen herausgestellt hat, verläuft diese Trennaht 34 optisch sehr sauber und vermittelt dem Betrachter ein ungestörtes Bild der zweifarbigen Slushhaut 32. Die Trennaht 34 läßt sich im übrigen relativ klein und unauffällig gestalten und besitzt einen exakten Verlauf, entsprechend der Anordnung des Trennsteges 18.

Von ihrer der Narbseite 48 gegenüberliegenden Rückseite bietet die zweifarbige Slushhaut 32 natürlich ein einfarbiges Bild, weil die zuletzt gebildete zweite Slushhaut 26 über den gesamten Bereich der Formfläche 12 hergestellt worden ist. Es ist empfehlenswert, die Hautdicke der zweiten Slushhaut 26 größer als die Hautdicke der ersten Slushhaut 24 zu wählen, wobei die Hautdicke der fertigen zweifarbigen Slushhaut 32 dann durch die Dicke der zweiten Slushhaut 26 vorgegeben ist. Diese etwas größere Dicke der zweifarbigen Slushhaut 32 rührt daher, daß sich die zweite Slushhaut 26 im Bereich 30 (also im Bereich der zuvor schon gefertigten ersten Slushhaut 24) mit geringer Dicke erstreckt.

Fig. 6 und 7 zeigen in einer Vorderansicht und einer Seitenansicht eine Trennvorrichtung, die verwendet wird, um nach der Herstellung einer ersten Slushhaut Teile dieser Haut entlang der Trennstege 18 abzutrennen, so daß die abgetrennten Teile anschließend entformt werden können.

Die Trennvorrichtung 36 besteht aus einem Handgriff 38 und einer eigentlichen Trennschneide 40, die bogenförmig verläuft. Vergleichbar einem Lötkolben ist die Trennschneide 40 aufheizbar.

Gemäß der Detail-Darstellung nach Fig. 8 besitzt die Trennschneide in ihrem bogenförmigen Verlauf eine Führungskerbe 42. Die Einkerbung ist so ausgebildet, daß sie in etwa der Querschnittsform des Trennsteges 18 entspricht.

Fig. 9 veranschaulicht die Handhabung der Trennvorrichtung 36 mit der Trennschneide 40. Die aufgeheizte Trennschneide wird mit ihrer Einkerbung im Bereich des Trennsteges 18 aufgesetzt. Da die Trennschneide 40 aufgeheizt ist, schmilzt in diesem Bereich die erste Slushhaut 24. Die Trennschneide 40 wird dann von Hand längs des Trennsteges 18 bewegt, wobei durch die Führungskerbe 42 eine sichere Führung und ein sicherer Bewegungsablauf gewährleistet sind. Durch das Schmelzen der Slushhaut 24 im Bereich der oberen Spitze des Trennsteges 18 sowie durch die mechanische Bewegung der Trennschneide 40 längs des Trennsteges 18 werden die Hautteile zu beiden Seiten des Trennsteges 18 sauber und exakt voneinander getrennt.

Die Erfindung ist nicht auf das voranstehend beispielhaft beschriebene Powder-Slush-Verfahren beschränkt, sondern grundsätzlich bei Slush-Verfahren ganz allgemein anwendbar. Insbesondere kann die Erfindung auch bei dem Liquid-Slush-Verfahren zum Einsatz kommen, bei welchem bekanntlich anstelle eines Pulvers eine Paste verwendet wird.

## Patentansprüche

1. Verfahren zur Herstellung von mehrfarbigen Slushhäuten (32) mit unterschiedlichen Farbbereichen (44, 46), insbesondere von Armaturentafeln für Kraftfahrzeuge oder dergleichen, wobei Slushmaterial in eine die Formgebung der Slushhaut bestimmende, beheizbare und rotierbare Form (10) eingebracht wird, die eine Formfläche (12) darbietet, auf der Farbzonen (14, 16) für die unterschiedlichen Farbbereiche (44, 46) der Slushhaut (32) vorgegeben und durch wenigstens einen Trennsteg (18) voneinander getrennt sind, wobei
a) Slushmaterial einer ersten Farbe auf die gesamte Formfläche (12) der Form (10) aufgebracht wird,
b) die Form (10) auf eine Formtemperatur aufgeheizt und in Rotation versetzt wird, so daß sich das Slushmaterial an der Formfläche (12) verteilt und ablagert,
c) das Slushmaterial anschließend sintert und geliert,
d) nach Abkühlung der Form die Farbzonen (16), denen eine andere Farbe zugewiesen ist, entformt werden, indem die Slushhaut (24) an den die Farbzonen (14, 16) trennenden Trennstegen (18) abgetrennt wird,
e) anschließend auf die gesamte Formfläche (12) erneut in allen Farbzonen (14, 16) ein Slushmaterial einer zweiten Farbe aufgebracht wird,
f) die Schritte b) und c) wiederholt werden,
g) optional die Schritte d), e) und f) bei Slushhäuten mit mehr als zwei Farben wiederholt werden,
h) und schließlich die Slushhaut (32) mit allen Farbbereichen (44, 46) entformt wird,
**dadurch gekennzeichnet, daß**
zur Durchführung von Schritt d) die Slushhaut (24) an der oberen Kante der Trennstege (18) mittels einer Trennvorrichtung (36) geschnitten wird, indem eine aufheizbare Trennschneide (40) an der Oberkante der Trennstege (18) entlanggeführt wird.

2. Verfahren nach Anspruch 1, dadurch gekennzeichnet, daß die Dicke der ersten Slushhäute (24) etwas geringer als die Höhe (28) der Trennstege (18) gewählt wird.

3. Verfahren nach Anspruch 1 und/oder 2, dadurch gekennzeichnet, daß die Verfahrensparameter der Rotation und der Formtemperatur veränderbar sind.

4. Verfahren nach einem oder mehreren der vorhergehenden Ansprüche 1 - 3, dadurch gekennzeichnet, daß das Powder-Slush-Verfahren mit PVC-Pulver angewendet wird.

5. Verfahren nach einem oder mehreren der vorhergehenden Ansprüche 1 - 4, dadurch gekennzeichnet, daß dreieckförmige spitze Trennstege (18) verwendet werden.

6. Vorrichtung zur Herstellung von farbigen Slushhäuten (32), bestehend aus einer Form (10) welche mehrere Farbzonen (14, 16) umfaßt, die voneinander durch wenigstens einen Trennsteg (18) getrennt sind, einer Pulverwanne, welche nacheinander Slushmaterialien wenigstens zweier unterschiedlicher Farben aufnimmt, Kupplungsmitteln zur Kupplung der Form (10) mit der Pulverpfanne zur Durchführung eines Powder-Slush-Verfahrens; Mittel zum Rotieren der Form (10), um das Slushmaterial auf der gesamten Formfläche (12) der Form (10) einschließlich bereits vorhandener Farbbereiche zu verteilen, , dadurch gekennzeichnet, daß die Vorrichtung eine Trennvorrichtung (36) zum Schneiden der Slushhaut (24) an unterschiedlichen Farbzonen (14, 16) entlang der Oberkante eines Trennsteges (18) umfaßt, welche eine beheizbare Trennschneide (40) besitzt.

7. Vorrichtung nach Anspruch 6, dadurch gekennzeichnet, daß die Trennstege (18) im Querschnitt eine Keilform mit zwei spitz aufeinander zulaufenden Flanken (20, 22) aufweist.

8. Vorrichtung nach Anspruch 7, dadurch gekennzeichnet, daß der Keilwinkel (50) etwa 45° beträgt.

9. Vorrichtung nach Anspruch 7 und/oder 8, dadurch gekennzeichnet, daß die Spitze der Trennstege (18) rund ausgebildet ist.

10. Vorrichtung nach einem der vorhergehenden Ansprüche 6 - 9, dadurch gekennzeichnet, daß die Höhe (28) der Trennstege (18) geringfügig größer als die Dicke der zuerst gebildeten Slushhaut ist.

11. Vorrichtung nach einem der Ansprüche 6-10, dadurch gekennzeichnet, daß die Trennschneide (40) teilweise bogenförmig verläuft.

12. Vorrichtung nach Anspruch 11, dadurch gekennzeichnet, daß die Trennschneide (40) auf ihrer äußeren Seite im bogenförmigen Verlauf eine Führungskerbe (42) besitzt, deren Querschnittsform dem Querschnitt der Trennstege (18) angepaßt ist.

## Claims

1. Method of manufacturing multicoloured skins (32) having different coloured regions (44, 46) by slush moulding, especially instrument panels for automobiles or the like, wherein slush material is introduced into a heatable, rotatable mould (10) which determines the shape of the slush-moulded skin, which mould offers a mould surface (12), on which colour zones (14, 16) for the different coloured regions (44, 46) of the slush-moulded skin (32) are determined and are separated from one another by at least one cutting web (18), wherein
a) slush material of a first colour is applied onto the entire mould surface (12) of the mould (10),
b) the mould (10) is heated to a moulding temperature and set in rotation, so that the slush material is distributed over and deposited on the mould surface (12),
c) the slush material then sinters and gels,
d) after cooling of the mould, the colour zones (16), for which a different colour is intended, are demoulded, in that the slush-moulded skin (24) is separated at the cutting webs (18) which separate the colour zones (14, 16),
e) then a slush material of a second colour is applied over the entire mould surface (12) again in all colour zones (14, 16),
f) steps b) and c) are repeated,
g) optionally, steps d), e) and f) are repeated in the case of slush-moulded skins having more than two colours,
h) and finally the slush-moulded skin (32) with all its coloured regions (44, 46) is removed from the mould,
characterized in that
for carrying out step d), the slush-moulded skin (24) is cut at the upper edge of the cutting webs (18) by means of a cutting device (36), in that a heatable cutting blade (40) is conducted along the upper edge of the cutting webs (18).

2. Method according to Claim 1, characterized in that the thickness of the first slush-moulded skins (24) is chosen somewhat smaller than the height (28) of the cutting webs (18).

3. Method according to Claim 1 and/or 2, characterized in that the process parameters of the rotation and mould temperature are variable.

4. Method according to one or more of the preceding Claims 1 to 3, characterized in that the powder slush method with PVC powder is used.

5. Method according to one or more of the preceding Claims 1 to 4, characterized in that triangular sharp cutting webs (18) are used.

6. Apparatus for the production of multicoloured skins (32) by slush moulding, consisting of a mould (10) which comprises a plurality of colour zones (14, 16), which are separated from one another by at least one cutting web (18), a powder trough, which receives in succession slush materials of at least two different colours, coupling means for coupling the mould (10) to the powder trough for carrying out a powder slush process; means for rotating the mould (10) in order to distribute the slush material over the entire mould surface (12) of the mould (10) including already existing coloured regions, characterized in that the apparatus comprises a cutting device (36) for cutting the slush-moulded skin (24) at different colour zones (14, 16) along the upper edge of a cutting web (18), which possesses a heatable cutting blade (40).

7. Apparatus according to Claim 6, characterized in that the cutting webs (18) have, in cross-section, a wedge-shape with two sharply converging flanks (20, 22).

8. Apparatus according to Claim 7, characterized in that the wedge angle (50) is approximately 45°.

9. Apparatus according to Claim 7 and/or 8, characterized in that the peak of the cutting webs (18) is of rounded form.

10. Apparatus according to one of the preceding Claims 6 to 9, characterized in that the height (28) of the cutting webs (18) is slightly greater than the thickness of the first formed slush-moulded skin.

11. Apparatus according to one of Claims 6 to 10, characterized in that the cutting blade (40) is partly of curved shape.

12. Apparatus according to Claim 11, characterized in that the cutting blade (40) possesses, on its outer side in the curved region, a guide notch (42), the cross-sectional shape of which is adapted to the cross-section of the cutting webs (18).

## Revendications

1. Procédé de fabrication par moulage au renversé de revêtements multicolores (32) comportant des domaines de couleurs différentes (44, 46), notamment de pupitres de conduite de véhicules automobiles, etc., le matériau d'embouage étant mis en place dans un moule (10) qui définit la mise en forme du revêtement et que l'on peut chauffer et faire tourner, moule qui présente une surface (12) sur laquelle des zones de couleur (14, 16) pour les domaines de couleurs différentes (44, 46) du revêtement (32) sont prédéfinies et séparées les unes des autres par au moins une nervure de séparation (18), dans lequel:
a) du matériau d'embouage d'une première couleur est introduit sur la surface totale (12) du moule (10),
b) le moule (10) est chauffé à une température de moulage et est mis en rotation de manière que le matériau d'embouage s'étale et se dépose sur la surface (12),
c) ensuite, le matériau d'embouage se fritte et se gélifie,
d) après refroidissement du moule, les zones (16), auxquelles est affectée une autre couleur, sont démoulées pendant que le revêtement (24) est détaché sur les nervures de séparation (18) séparant les zones de couleur (14, 16),
e) ensuite, sur la surface totale (12), de nouveau dans toutes les zones de couleur (12, 14), est introduit un matériau d'embouage d'une seconde couleur,
f) les phases b) et c) sont renouvelées,
g) éventuellement, les phases d), e) et f), pour des revêtements comportant plus de deux couleurs, sont renouvelées,
h) et, enfin, le revêtement (32) comportant tous les domaines de couleurs (44, 46) est démoulé,
caractérisé en ce que
pour la réalisation de la phase d), le revêtement (24) est, sur l'arête de la nervure de séparation (18), découpé au moyen d'un disposif de séparation (36), pendant qu'un tranchant de découpe (40) est guidé le long de l'arête supérieure de la nervure de séparation (18).

2. Procédé suivant la revendication 1, caractérisé en ce que l'épaisseur du premier revêtement (24) est choisie un peu plus faible que la hauteur (28) de la nervure de séparation (18).

3. Procédé suivant la revendication 1 ou 2, caractérisé en ce que les paramètres de rotation et de température de moule du procédé sont variables.

4. Procédé suivant l'une ou plusieurs des revendications précédentes 1 à 3, caractérisé en ce que le procédé powder-slush est utilisé avec de la poudre de PVC.

5. Procédé suivant l'une ou plusieurs revendications précédentes 1 à 4, caractérisé en ce qu'on utilise des nervures de séparation (18) aiguës triangulaires.

6. Dispositif de fabrication de revêtements colorés (32), comprenant un moule (10) lequel comporte plusieurs zones de couleur (14, 16) qui sont séparées les unes des autres par au moins une nervure de séparation (18), une cuve de poudre qui comporte successivement des matériaux d'embouage d'au moins deux couleurs différentes, des moyens d'accouplement pour coupler le moule à la cuve de poudre pour réaliser un procédé powder-slush; un moyen pour faire tourner le moule (10), pour distribuer le matériau d'embouage sur toute la surface (12) du moule (10) y compris les domaines de couleur déjà existants, caractérisé en ce que le dispositif comporte un dispositif de séparation (36) pour séparer le revêtement (24) en des zones de couleurs différentes (14, 16) le long de l'arête supérieure d'une nervure de séparation (18), le dispositif de séparation (36) ayant un tranchant chauffable (40).

7. Dispositif suivant la revendication 6, caractérisé en ce que la nervure de séparation (18) présente, en coupe transversale, une forme de dièdre avec deux flancs saillants (20, 22) allant l'un vers l'autre.

8. Dispositif suivant la revendication 7, caractérisé en ce que l'angle (50) du dièdre se monte à environ 45°.

9. Dispositif suivant la revendication 7 et/ou 8, caractérisé en ce que l'arête de la nervure de séparation (18) est formée arrondie.

10. Dispositif suivant l'une des revendications précédentes 6 à 9, caractérisé en ce que la hauteur (28) de la nervure de séparation (18) est plus grande, mais de manière insignifiante, que l'épaisseur du revêtement formé en premier lieu.

11. Dispositif suivant l'une des revendications 6 à 10, caractérisé en ce que le tranchant (40) a une forme partiellement cintrée.

12. Dispositif suivant la revendication 11, caractérisé en ce que le tranchant (40) comporte sur son côté externe, dans la forme cintrée, une entaille de guidage (42) dont la forme du profil est adaptée à celui de la nervure de séparation (18).
